# EUROPÄISCHE PATENTANMELDUNG

(11) **EP 1 624 258 A2**
(43) Veröffentlichungstag der Anmeldung: **08.02.2006**
(21) Anmeldenummer: 05405276.6
(22) Anmeldetag: 30.03.2005
(51) Int. Cl.: F24F 7/08, F24F 12/00

(54) **Einrichtung zur Raumlüftung und Einbaumodul zur Raumlüftung**

(30) Priorität: 02.08.2004 CH 12952004
(71) Anmelder: Atum GmbH, 8053 Zürich (CH)
(72) Erfinder: Nägeli, René, 8053 Zürich (CH)
(74) Vertreter: Nückel, Thomas

(57) **Zusammenfassung**

Die erfindungsgemäße Einrichtung zur Raumlüftung weist einen in eine Wand oder ein Fenster des Raumes einbaubaren Frischluftkanal (1) auf, über den dem Raum Frischluft zuführbar ist. Die Einrichtung weist zudem einen in die Wand des Raumes einbaubaren Abluftkanal (2) auf, über den Abluft aus dem Raum abführbar ist. Zudem weist die Einrichtung einen Wärmetauscher (7.1, 7.2) auf, über welchen der Abluftkanal (2) mit dem Frischluftkanal (1) gekoppelt ist.

## Beschreibung

### Technisches Gebiet

Die Erfindung betrifft eine Einrichtung und ein Einbaumodul zur Raumlüftung. Mit der Erfindung kann ein beheizter Raum, beispielsweise ein Wohnraum oder ein Büroraum, kontinuierlich mit Frischluft versorgt werden.

Gebäudehüllen, insbesondere Fenster und Wohnungstüren werden, um den Wärmeverlust so gering wie möglich zu halten, immer luftdichter ausgeführt. Bei nicht belüfteten Räumen steigt aufgrund der Dichtigkeit der Fenster und Fassaden die Konzentration an Geruchs- und Schadstoffen sowie die Raumfeuchte und die Sauerstoffkonzentration nimmt entsprechend ab. Dies führt in den Räumen zu einem ungesunden, muffigen Raumklima. Verstärkt wird dieser Effekt durch eine ganztägige Abwesenheit der Bewohner, beispielsweise während der Berufstätigkeit oder den Ferien. Aufgrund der hohen Luftfeuchtigkeit in den Räumen schlägt sich in der kalten Jahreszeit bei schlechter oder nicht ausreichender Lüftung Wasserdampf als Kondensat an den Fenstern und Türen nieder, obwohl eine genügende Wärmedämmung vorhanden ist.

### Stand der Technik

Um dieses Problem zu beheben, sind aus dem Stand der Technik Flügelbeschläge für Fenster bekannt, mit denen Fenster leicht beabstandet von den Fensterdichtungen verriegelt werden können. Die dadurch gebildete undichte Stelle zwischen Fenster und Fensterdichtung dient dazu den Raum zu lüften.

Des Weiteren sind aus dem Stand der Technik Fensterbeschläge bekannt, mit dem sich das Fenster zu Seite schieben oder kippen lässt, um den Raum zu lüften.

Alternativ dazu sind auch zentrale und dezentrale Lüftungsanlagen mit einem elektromechanischen Antrieb und einer Wärmerückgewinnung bekannt. Die beschriebenen Ausführungsformen haben jedoch den Nachteil, dass zum Erzeugen des zum Lüften notwendigen Luftstroms entweder elektrische Energie erforderlich ist oder, insbesondere beim Lüften mit Hilfe der Fenster, ein erheblicher Wärmeverlust entsteht.

### Darstellung der Erfindung

Eine Aufgabe der Erfindung ist es, eine Einrichtung zur Raumlüftung anzugeben, mit der eine kontinuierliche Frischluftzufuhr bei minimalem Wärmeverlust möglich ist.

Vorteilhafter Weise erfolgt die Versorgung des Raums mit Frischluft und die Abfuhr der Abluft aus dem Raum passiv, das heisst, ohne dass elektrische Energie verbraucht wird.

Die Aufgabe wird durch eine Einrichtung zur Raumlüftung mit den Merkmalen gemäß Patentanspruch 1 gelöst. Die Aufgabe wird zudem durch ein Einbaumodul zur Raumlüftung mit den Merkmalen gemäß Patentanspruch 11 gelöst.

Die erfindungsgemäße Einrichtung zur Raumlüftung weist einen in eine Wand des Raumes einbaubaren Frischluftkanal auf, über den dem Raum Frischluft zuführbar ist. Die Einrichtung weist zudem einen in die Wand des Raumes einbaubaren Abluftkanal auf, über den Abluft aus dem Raum abführbar ist. Zudem weist die Einrichtung einen Wärmetauscher auf, über welchen der Abluftkanal mit dem Frischluftkanal gekoppelt ist.

Das erfindungsgemäße Einbaumodul zur Raumlüftung, welches in eine Wand des Raumes oder in ein Fenster einbaubar ist, weist ein Gehäuse auf, in dem ein Frischluftkanal vorgesehen ist, über den dem Raum Frischluft zuführbar ist. Im Gehäuse ist des Weiteren ein Abluftkanal vorgesehen, über den Abluft aus dem Raum abführbar ist. Zudem ist im Gehäuse ein Wärmetauscher vorgesehen, über welchen der Abluftkanal mit dem Frischluftkanal gekoppelt ist.

Vorteilhafte Weiterbildungen der Erfindung ergeben sich aus den in den abhängigen Patentansprüchen angegebenen Merkmalen.

Bei einer Ausführungsform der erfindungsgemäßen Einrichtung zur Raumlüftung weist der Wärmetauscher wärmeleitfähige Lamellen auf.

Bei einer weiteren Ausführungsform der erfindungsgemäßen Einrichtung zur Raumlüftung weisen die Lamellen Aluminium oder Kupfer auf. Dadurch lässt sich der Wärmeaustausch zwischen der Frischluft und der Abluft verbessern.

Bei einer Weiterbildung der erfindungsgemäßen Einrichtung zur Raumlüftung sind die Lamellen U-förmig oder als Stege ausgebildet. Derartige Lamellen sind einfach herstellbar, leicht mit der Wand des Frischluftkanals und des Abluftkanals verbindbar und weisen eine ausreichende Stabilität auf.

Zudem ist es von Vorteil, wenn bei der erfindungsgemäßen Einrichtung zur Raumlüftung die Lamellen im Frischluftkanal und im Abluftkanal vorgesehen sind, weil dadurch der Wärmeaustausch zwischen der Frischluft und der Abluft verbessert werden kann.

Darüber hinaus kann bei der erfindungsgemäßen Einrichtung zur Raumlüftung der Abluftkanal einen Ablufteinlass und der Frischluftkanal einen Frischluftauslass aufweisen, wobei der Ablufteinlass und der Abluftauslass benachbart angeordnet sind. Dadurch lässt sich der Aufbau und Einbau der Einrichtung zur Raumlüftung kostengünstig und einfach realisieren. Auf der Innenseite der Wand ist lediglich eine Öffnung vorzusehen.

Ferner wird in einer Weiterbildung vorgeschlagen, dass die erfindungsgemäße Einrichtung zur Raumlüftung eine Lüftungsklappe aufweist, mittels welcher der Frischluftkanal und der Abluftkanal verschließbar sind. Dadurch lässt sich sicherstellen, dass eine Lüftung des Raumes nur dann erfolgt, wenn diese auch wirklich gewünscht ist.

Zudem kann die erfindungsgemäße Einrichtung zur Raumlüftung einen Luftfilter aufweisen, welcher im Frischluftkanal angeordnet ist. Dies hat den Vorteil, dass die in den Raum strömende Frischluft vorab von Staubpartikeln gereinigt und dadurch die Verschmutzung des Raumes durch Staub reduziert wird.

Bei der erfindungsgemäßen Einrichtung zur Raumlüftung kann der Luftfilter mit einem mikrofaserbeschichteten Element ausgestattet sein. Dieses hat eine ausreichend hohe Filterwirkung und lässt sich jederzeit reinigen oder durch ein Neues ersetzen.

Bei einer Weiterbildung der erfindungsgemäßen Einrichtung zur Raumlüftung ist der Frischluftkanal im Inneren des Abluftkanals angeordnet. Dadurch lässt sich die Fläche, über die der Wärmeaustausch zwischen Frischluft und Abluft erfolgt, vergrößern, ohne dass die gesamte Einrichtung zur Raumlüftung vergrößert werden muss.

Schließlich kann bei dem erfindungsgemäßen Einbaumodul zur Raumlüftung das Gehäuse eine Wärmedämmschicht aufweisen. Dadurch lässt sich sicherstellen, dass das Einbaumodul keine Kältebrücke bildet. Mit Hilfe einer Schalldämmschicht kann zusätzlich auch eine ausreichende Schalldämmung erreicht werden.

### Kurze Beschreibung der Zeichnungen

Im Folgenden wird die Erfindung mit mehreren Ausführungsbeispielen anhand von 12 Figuren weiter erläutert.
- Figur 1: zeigt eine erste Ausführungsform der erfindungsgemäßen Vorrichtung zur Raumlüftung in der Seitenansicht.
- Figur 2: zeigt die erste Ausführungsform der erfindungsgemäßen Vorrichtung zur Raumlüftung in einem ersten Querschnitt.
- Figur 3: zeigt die erste Ausführungsform der erfindungsgemäßen Vorrichtung zur Raumlüftung in einem zweiten Querschnitt.
- Figur 4: zeigt die erste Ausführungsform der erfindungsgemäßen Vorrichtung zur Raumlüftung in einem dritten Querschnitt.
- Figur 5: zeigt eine zweite Ausführungsform der erfindungsgemäßen Vorrichtung zur Raumlüftung in der Seitenansicht.
- Figur 6: zeigt die zweite Ausführungsform der erfindungsgemäßen Vorrichtung zur Raumlüftung in einem ersten Querschnitt.
- Figur 7: zeigt die zweite Ausführungsform der erfindungsgemäßen Vorrichtung zur Raumlüftung in einem zweiten Querschnitt.
- Figur 8: zeigt die zweite Ausführungsform der erfindungsgemäßen Vorrichtung zur Raumlüftung in einem dritten Querschnitt.
- Figur 9: zeigt eine dritte Ausführungsform der erfindungsgemäßen Vorrichtung zur Raumlüftung in der Seitenansicht.
- Figur 10: zeigt die dritte Ausführungsform der erfindungsgemäßen Vorrichtung zur Raumlüftung in einem ersten Querschnitt.
- Figur 11: zeigt die dritte Ausführungsform der erfindungsgemäßen Vorrichtung zur Raumlüftung in einem zweiten Querschnitt.
- Figur 12: zeigt die dritte Ausführungsform der erfindungsgemäßen Vorrichtung zur Raumlüftung in einem dritten Querschnitt.

### Wege zur Ausführung der Erfindung

Im Folgenden wird die Kombination aus Frischluftkanal, Abluftkanal und Wärmetauscher als Einrichtung zur Raumlüftung bezeichnet. Werden diese Komponenten zu einer einzigen Einbaueinheit zusammengefügt, so wird im Folgenden von einem Einbaumodul zur Raumlüftung gesprochen. Bei der Einrichtung zur Raumlüftung ist es möglich, dass deren einzelne Komponenten erst vor Ort zusammengefügt und eingebaut werden. Die Einrichtung zur Raumlüftung kann aber auch als Einbaumodul realisiert werden.

### Erste Ausführungsform

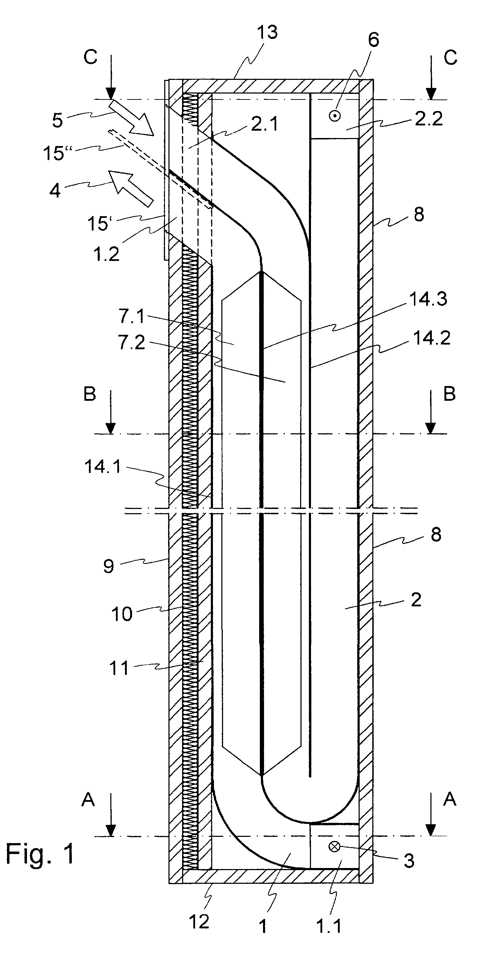

Im Folgenden wird eine erste Ausführungsform der Erfindung beschrieben. In Figur 1 ist eine erste Ausführungsform der Vorrichtung zur Raumlüftung im Aufriss in der Seitenansicht gezeigt. Die Vorrichtung weist einen Frischluftkanal 1 mit einem Frischlufteinlass 1.1, durch den Frischluft eintritt, und einen Frischluftauslass 1.2 auf, aus dem die Frischluft austritt. Der Frischluftauslass 1.2 ist auf der Innenseite der Wand angeordnet, so dass die Frischluft in den Raum strömt. Zudem ist ein Abluftkanal 2 vorgesehen, der auf der Innenseite der Wand einen Ablufteinlass 2.1 und auf der Aussenseite der Wand und damit auf der Gebäudeaußenseite einen Abluftauslass 2.2 aufweist. Die Abluft strömt, wie durch den Pfeil 5 gekennzeichnet, in den Abluftkanal 2 und tritt aus dem Raum beziehungsweise aus dem Gebäude durch den Abluftauslass 2.2, wie durch den Pfeil 6 gekennzeichnet, aus. Der Abluftkanal 2 und der Frischluftkanal 1 verlaufen, wie in Figur 1 gezeigt, im Wesentlichen parallel zueinander. Der Frischluftkanal 1 und der Abluftkanal 2 können als Rohre ausgebildet und aus Blech geformt sein. Um den Wärmeaustausch zwischen der Abluft und der Frischluft zu gewährleisten, weist sowohl der Frischluftkanal 1 als auch der Abluftkanal 2 eine oder mehrere Wärmetauscherlamellen 7.1 und 7.2 auf. Auf der dem Raum zugewandten Seite der Vorrichtung zur Raumlüftung ist eine Lüftungsklappe 15 vorgesehen. Die Lüftungsklappe 15 ist in Figur 1 in geschlossenem Zustand durch das Bezugszeichen 15' und im offenen Zustand durch das Bezugszeichen 15'' gekennzeichnet.

Die erfindungsgemäße Vorrichtung zur Raumlüftung kann als Einbaumodul aufgebaut sein. Dies hat den Vorteil, dass es industriell vorgefertigt werden kann und als kompaktes Bauelement auf der Baustelle in eine entsprechende Aussparung an der Außenwand einfach und schnell eingebaut werden kann. Das Einbaumodul weist dazu ein Gehäuse, das eine Innenwand 9, einen Boden 12, eine Außenwand 8 und einen Deckel 13 umfasst, auf. Das Gehäuse kann zusätzlich eine Isolierung 10 zur Wärme- und/oder Schalldämmung aufweisen. Dabei kann auf die Innenwand 9 des Gehäuses, wie in Figur 1 gezeigt, die Isolierung 10 in Verbindung mit einer Metallfolie oder Platte 11 aufgebracht sein.

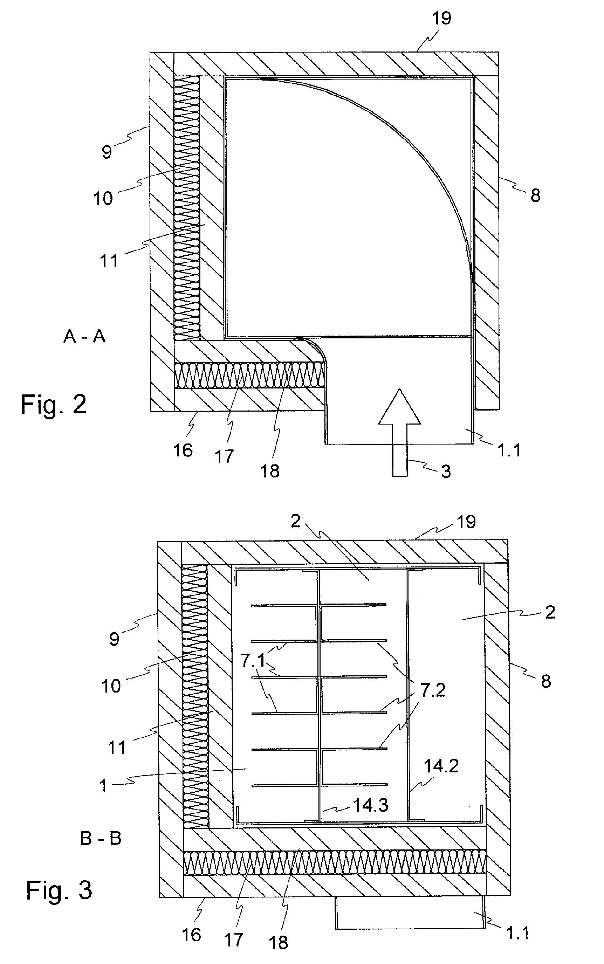

In Figur 2 ist die erste Ausführungsform der erfindungsgemäßen Vorrichtung zur Raumlüftung in der Draufsicht entlang des Schnitts A-A dargestellt. Die Seitenwände 16 und 19 des Gehäuses können zusätzlich isoliert sein. Bei der in Figur 2 gezeigten Ausführungsform ist lediglich die Seitenwand 16 des Gehäuses mit einer Isolierung 17 und einer Metallfolie oder Platte 18 versehen.

In Figur 3 ist die erste Ausführungsform der erfindungsgemäßen Vorrichtung zur Raumlüftung in der Draufsicht entlang des Schnitts B-B dargestellt. Die Wärmetauscherlamellen 7.1, welche im Frischluftkanal 1 angeordnet sind, und die Wärmetauscherlamellen 7.2, welche im Abluftkanal 2 angeordnet sind, sind U-förmig geformt und wärmeleitfähig. Hierfür eignet sich insbesondere Kupfer und Aluminium aufgrund ihrer hohen Leitfähigkeit. Die U-förmigen Lamellen 7.1 und 7.2 sind einfach herstellbar, leicht mit der Trennwand 14.3, welche den Frischluftkanal 1 vom Abluftkanal 2 trennt, verbindbar und weisen eine ausreichend hohe Stabilität auf. Die Wärmetauscherlamellen 7.1 und 7.2 können statt dessen auch als stranggepresste Stege aus Aluminium ausgebildet sein, die über ein Trennblech miteinander verbunden sind, was in den Figuren jedoch nicht dargestellt ist. Um die Länge des Abluftkanals 2 zu vergrößern, kann dieser mit einer zusätzlichen Trennwand 14.2 ausgestattet sein.

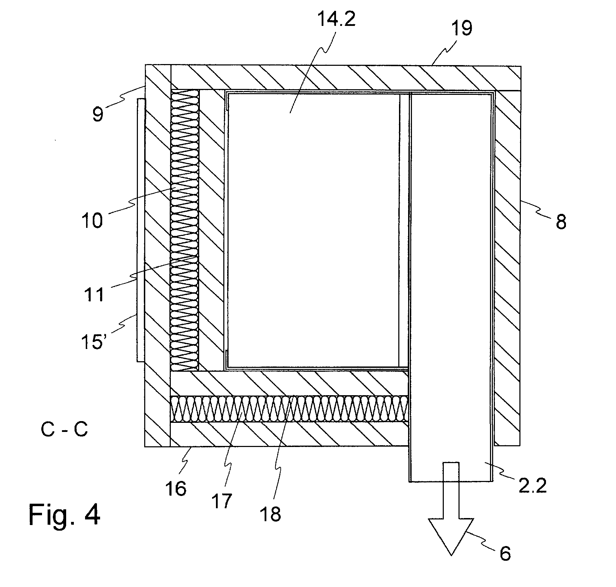

In Figur 4 ist die erste Ausführungsform der erfindungsgemäßen Vorrichtung zur Raumlüftung in der Draufsicht entlang des Schnitts C-C dargestellt.

### Zweite Ausführungsform

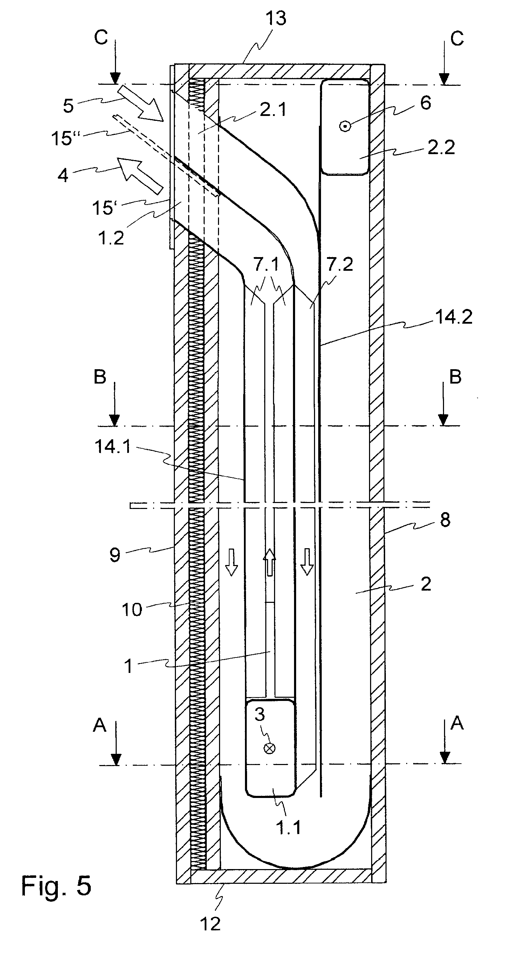

Im Folgenden wird eine zweite Ausführungsform der Erfindung beschrieben. In Figur 5 ist eine zweite Ausführungsform der Vorrichtung zur Raumlüftung im Aufriss in der Seitenansicht gezeigt. Im Wesentlichen unterscheidet sich die zweite Ausführungsform von der ersten Ausführungsform dadurch, dass der Frischluftkanal 1 im Inneren des Abluftkanals 2 angeordnet ist. Dies führt dazu, dass der Frischlufteinlass 1.1 des Frischluftkanals 1 nicht mehr senkrecht unterhalb des Abluftauslasses 2.2 angeordnet ist, sondern seitlich versetzt dazu.

Bei der zweiten Ausführungsform ist die Oberfläche des Wärmetauscherelements grösser als bei der ersten Ausführungsform, wodurch bei der zweiten Ausführungsform ein höherer und damit verbesserter Wirkungsgrad erzielt wird.

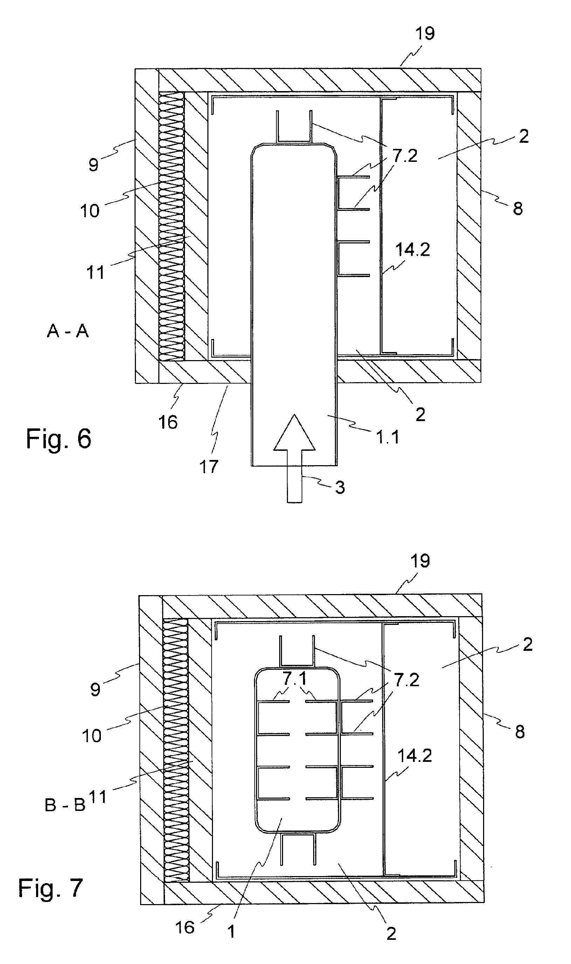

In Figur 6 ist die zweite Ausführungsform der erfindungsgemäßen Vorrichtung zur Raumlüftung in der Draufsicht entlang des Schnitts A-A gezeigt.

In Figur 7 ist die zweite Ausführungsform der erfindungsgemäßen Vorrichtung zur Raumlüftung in der Draufsicht entlang des Schnitts B-B gezeigt. Die Wärmetauscherlamellen 7.1 und 7.2 sind bei der zweiten Ausführungsform kürzer als bei der ersten Ausführungsform. Insgesamt lassen sich bei der zweiten Ausführungsform trotz gleichem Abstand zwischen den Wärmetauscherlamellen insgesamt mehr Wärmetauscherlamellen anordnen als bei der ersten Ausführungsform.

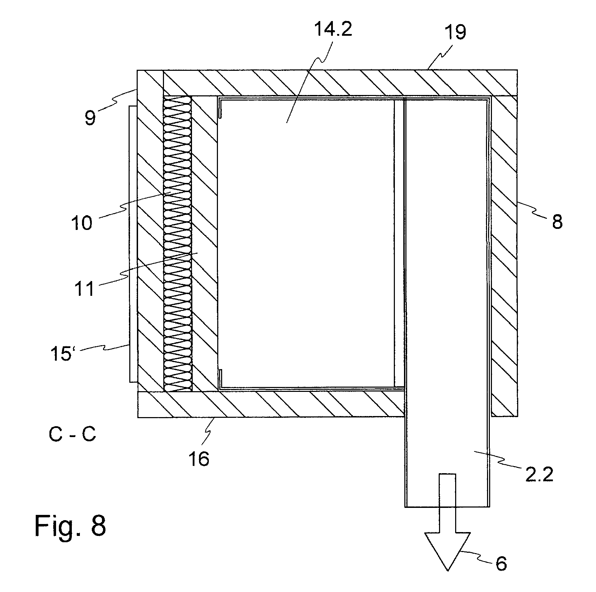

In Figur 8 ist die zweite Ausführungsform der erfindungsgemäßen Vorrichtung zur Raumlüftung in der Draufsicht entlang des Schnitts C-C dargestellt.

### Dritte Ausführungsform

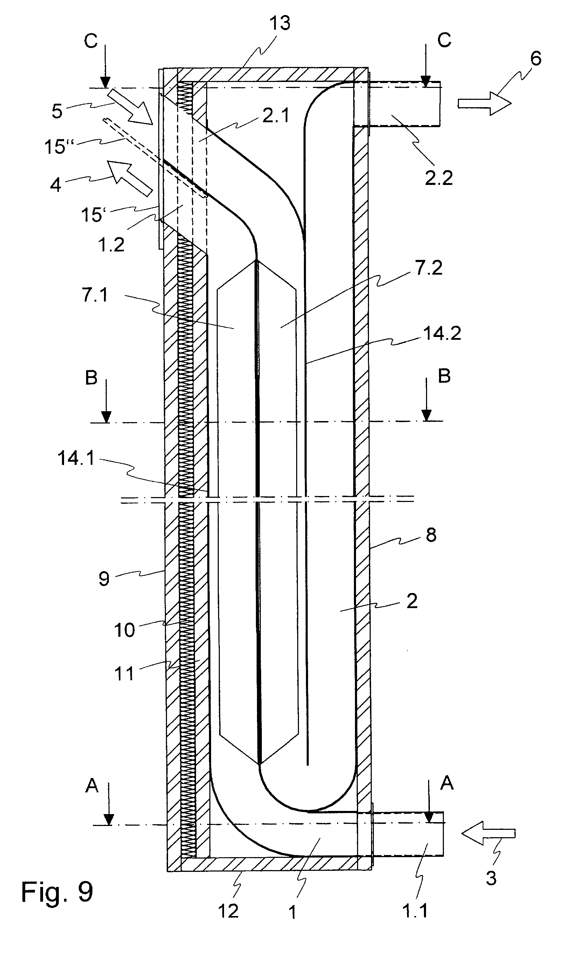

Im Folgenden wird eine dritte Ausführungsform der Erfindung beschrieben. In Figur 9 ist eine dritte Ausführungsform der Vorrichtung zur Raumlüftung im Aufriss in der Seitenansicht gezeigt. Die dritte Ausführungsform unterscheidet sich im Wesentlichen von der in Figur 1 gezeigten ersten Ausführungsform dadurch, dass der Frischlufteinlass 1.1 und der Abluftauslass 2.2 nicht im rechten Winkel zum Frischluftauslass 1.2 und Ablufteinlass 2.1 angeordnet sind, sondern im gleichen Winkel wie der Frischluftauslass 1.2 und der Ablufteinlass 2.1 aus dem Einbaumodul austreten.

Welche der Ausführungsformen bevorzugt wird, hängt von den technischen Randbedingungen und den gebäudlichen Gegebenheiten ab.

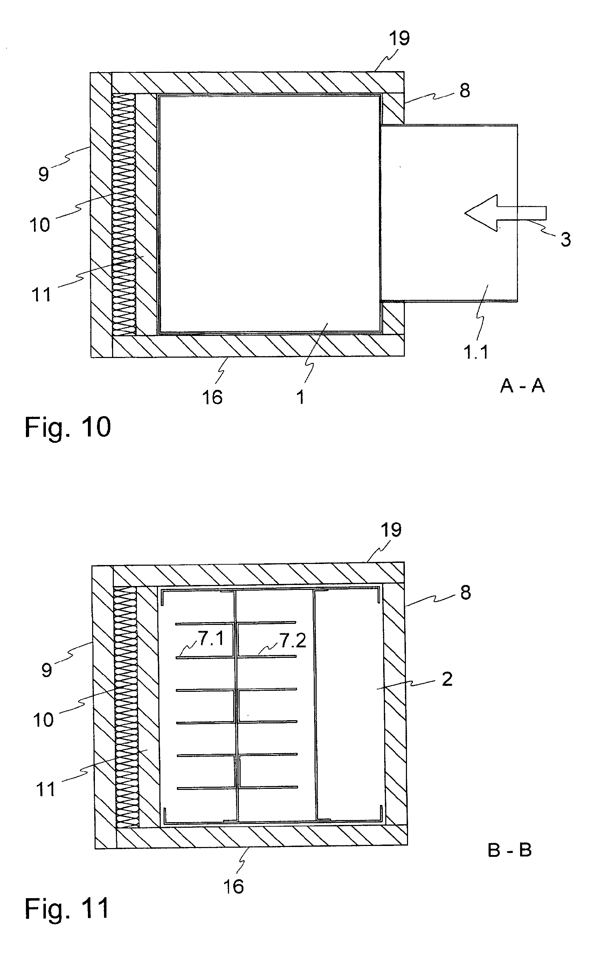

In Figur 10 ist die dritte Ausführungsform der erfindungsgemäßen Vorrichtung zur Raumlüftung in der Draufsicht entlang des Schnitts A-A gezeigt.

In Figur 11 ist die dritte Ausführungsform in der Draufsicht entlang des Schnitts B-B gezeigt. Die Wärmetauscherlamellen 7.1 und 7.2 sind bei der dritten Ausführungsform genauso geformt wie bei der ersten Ausführungsform.

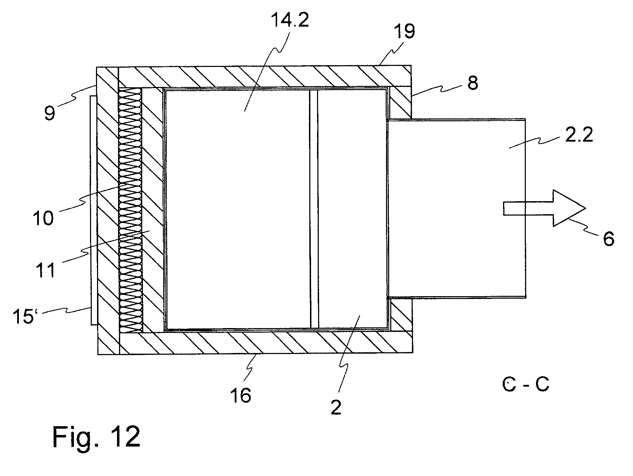

In der Figur 12 schließlich ist die dritte Ausführungsform in der Draufsicht entlang des Schnitts C-C gezeigt.

Die Zuführung der Frischluft und die Abführung der verbrauchten Raumluft erfolgt bei allen Ausführungsformen in zwei getrennten Kanälen 1 und 2, die in ein Einbaumodul integriert sind. Das Einbaumodul lässt sich problemlos in die Fassade einbauen. Sowohl der Frischluftstrom als auch der Abluftstrom entstehen durch die statische Höhe zwischen Ein- und Austritt der Luft sowie durch den Temperaturunterschied zwischen dem Rauminneren und der Gebäudeumgebung. Dies hat den Vorteil, dass keine elektrische Energie verbraucht wird, um den Luftaustausch zu ermöglichen.

Die Geometrie des Frischluftkanals 1, des Abluftkanals 2 und der Wärmetauscherlamellen 7.1 und 7.2 ist so gewählt, dass eine optimale, natürliche Luftströmung ermöglicht wird.

Die Vorrichtung zur Raumlüftung ist so konstruiert, dass sie jederzeit problemlos gereinigt werden kann. Die Innenwand 9 ist dazu abnehmbar. Das Wärmetauscherelement mit den Wärmetauscherlamellen 7.1, 7.2 kann herausgenommen und mit Wasser gereinigt werden. Ebenso kann das Gehäuse 8, 9, 12, 13 mit einem feuchten Tuch gereinigt werden.

Im Inneren des Frischluftkanals 1 kann ein Luftfilter vorgesehen sein, der beispielsweise mit einem mikrofaserbeschichteten Element bestückt ist. Dadurch kann die in den Raum transportierte Frischluft bereits vorab gereinigt werden.

Die Wärmetauscherlamellen 7.1 und 7.2 können zusätzlich mit Noppen versehen sein, um die einströmende Frischluft zu filtern.

Mit Hilfe der erfindungsgemäßen Vorrichtung zur Raumlüftung wird ein kontinuierlicher Luftaustausch mit Wärmerückgewinnung ermöglicht.

### Funktionsweise

Kalte Frischluft tritt durch den Frischlufteinlass 1.1 in den Frischluftkanal 1 ein, wird dort nach oben geleitet und über den Frischluftauslass 1.2 in den Raum geführt. Der Frischluftkanal 1 ist durch den mit Wärmetauscherlamellen 7.1 und 7.2 ausgestatteten Wärmetauscher mit dem Abluftkanal 2 gekoppelt. Die Wärmetauscherlamellen 7.1 und 7.2, welche auch als Rippen bezeichnet werden können, sind auf das Trennblech 14.3 aufgeschweißt oder aufgelötet. Während die Frischluft an den Wärmetauscherlamellen 7.1 entlang strömt, erwärmt sie sich und erhält so den Auftrieb. Gleichzeitig tritt warme Raumluft als Abluft oben in den Ablufteinlass 2.1 ein und wird über den Abluftkanal 2 an den Wärmetauscherlamellen 7.2 vorbei nach unten geführt. Während die Abluft an den Wärmetauscherlamellen 7.2 vorbei strömt, gibt sie Wärmeenergie an die Lamellen 7.2 ab und kühlt sich dabei weiter ab. Die nun kühlere Abluft wird im unteren Teil des Abluftkanals 2 umgeleitet, wieder nach oben geführt und tritt durch den Abluftauslass 2.2 aus dem Raum beziehungsweise aus dem Gebäude aus.

Das Gehäuse kann aus Holz oder Metall bestehen und wird so in die Fassade eingebaut, dass sich ein Teil auf der Außenseite und ein Teil auf der Innenseite des Gebäudes befindet, Das Gehäuse bildet somit einen Teil der Außenwand des Raumes. Beim Einbaumodul sind im Gehäuse geformte Füllstücke in Holz mit Metallverkleidung und eine Schalldämmeinlage mit Metalloberfläche fest eingebaut. Die Lufteinlässe 1.1 und 2.1 und die Luftauslässe 1.2 und 2.2 können beispielsweise aus Chrom-Nickel-Stahl oder Aluminium hergestellt sein. Der Frischlufteinlass 1.1 und der Abluftauslass 2.2 können an der Fassadenhaut abgedichtet werden. Zusätzlich können verstellbare Einsätze vorgesehen sein, mit denen der Frischlufteinlass 1.1 und der Abluftauslass 2.2 verlängerbar sind, so dass sie dadurch an die Wandstärke des Gebäudes angepasst werden können.

Um zu verhindern, dass Insekten in den Frischluftkanal 1 und den Abluftkanal 2 gelangen, können Drähte auf die Einsätze aufgeschweißt werden oder ein entsprechend feinmaschiges Netz eingebaut sein.

Das Gehäuse kann je nach Einbauart und Anforderung mit zusätzlichen Aufdoppelungen wärme- und schalltechnisch ausgerüstet werden.

Die Innenwand 9, die auch als Frontdeckel bezeichnet wird, bestehend aus der Platte 9, der Isolierung 10 und der Platte 11, ist abnehmbar und kann als isolierte Sandwichplatte in Holz oder Metall ausgeführt sein. Im oberen Bereich weist der Frontdeckel 9 eine Öffnung für den Frischluftauslass 1.2 und den Ablufteinlass 2.1 auf. Mit der Lüftungsklappe 15 kann die Öffnung bei Bedarf geschlossen werden.

Die Wände 14.1, 14.2, 14.3 des Frischluftkanals 1 und des Abluftkanals 2 können aus Metallblech mit einer Stärke zwischen 0,4 und 1 mm ausgeführt sein. Der Frischluftkanal 1 weist in einer Ausführungsform im unteren Bereich einen Radius von 100 bis 130 mm auf. Die Bleche, die zusammen den Frischluftkanal 1 und den Abluftkanal 2 bilden, sind abgekantet und als Standardbauteile in Serie herstellbar. Die Wärmetauscherlamellen 7.1 und 7.2 sind an die Luftströmung angepasst, sodass der Luftwiderstand möglichst klein wird. Grundsätzlich gilt, je kleiner der Luftwiderstand bei möglichst grosser Wärmetauscherfläche ist, desto höher ist der Wirkungsgrad.

Mit Hilfe der Vorrichtung zur Raumlüftung wird neben der Lüftung des Raumes auch dafür gesorgt, dass der Wasserdampfdruck im Raum an die Umgebung ausserhalb des Raums angepasst wird.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

Bezugszeichenliste
- 1: Frischluftkanal
- 1.1: Frischlufteinlass
- 1.2: Frischluftauslass
- 2: Abluftkanal
- 2.1: Ablufteinlass
- 2.2: Abluftauslass
- 3: Strömungsrichtung der Frischluft
- 4: Strömungsrichtung der Frischluft
- 5: Strömungsrichtung der Abluft
- 6: Strömungsrichtung der Abluft
- 7.1: Wärmetauscherlamellen im Frischluftkanal
- 7.2: Wärmetauscherlamellen im Abluftkanal
- 8: Aussenwand
- 9: erste Innenwand
- 10: Isolierung
- 11: zweite Innenwand
- 12: Boden
- 13: Deckel
- 14.1: Seitenblech
- 14.2: Seitenblech
- 14.3: Seitenblech
- 15': Lüftungsklappe in Stellung geschlossen
- 15'': Lüftungsklappe in Stellung offen
- 16: erste Seitenwand
- 17: Isolierung
- 18: zweite Seitenwand
- 19: Seitenwand

## Patentansprüche

1. Einrichtung zur Raumlüftung,
- mit einem in eine Wand des Raums einbaubaren Frischluftkanal (1), über den dem Raum Frischluft zuführbar ist,
- mit einem in die Wand des Raums einbaubaren Abluftkanal (2), über den Ablauft aus dem Raum abführbar ist, und
- mit einem Wärmetauscher (7), über welchen der Abluftkanal (2) mit dem Frischluftkanal (1) gekoppelt ist.

2. Einrichtung nach Patentanspruch 1, bei der der Wärmetauscher (7) wärmeleitfähige Lamellen (7.1, 7.2) aufweist.

3. Einrichtung nach Patentanspruch 2, bei der die Lamellen (7.1, 7.2) Aluminium oder Kupfer aufweisen.

4. Einrichtung nach Patentanspruch 2 oder 3, bei der die Lamellen (7.1, 7.2) U-förmig oder als Stege ausgebildet sind.

5. Einrichtung nach einem der Patentansprüche 2 bis 4, bei der die Lamellen (7.1, 7.2) im Frischluftkanal
(1) und im Abluftkanal (2) vorgesehen sind.

6. Einrichtung nach einem der Patentansprüche 1 bis 5,
- bei der der Abluftkanal (2) einen Ablufteinlass (2.1) aufweist,
- bei der der Frischluftkanal (1) einen Frischluftauslass (1.2) aufweist, und
- wobei der Ablufteinlass (2.1) und der Frischluftauslass (1.2) benachbart angeordnet sind.

7. Einrichtung nach einem der Patentansprüche 1 bis 6, mit einer Lüftungsklappe (15), mittels welcher der Frischluftkanal (1) und der Abluftkanal (2) verschliessbar sind.

8. Einrichtung nach einem der Patentansprüche 1 bis 7, mit einem Luftfilter, welches im Frischluftkanal (1) angeordnet ist.

9. Einrichtung nach Patentanspruch 8, bei der das Luftfilter eine mikrofaserbeschichtetes Element aufweist.

10. Einrichtung nach einem der Patentansprüche 1 bis 9, bei der der Frischluftkanal (1) im Inneren des Abluftkanals (2) angeordnet ist.

11. Einbaumodul zur Raumlüftung, welches in eine Wand oder ein Fenster des Raums einbaubar ist,
- mit einem Gehäuse (8, 9, 12, 13),
- in dem ein Frischluftkanal (1) vorgesehen ist, über den dem Raum Frischluft zuführbar ist,
- in dem ein Abluftkanal (2) vorgesehen ist, über den Ablauft aus dem Raum abführbar ist,
- und in dem ein Wärmetauscher (7) vorgesehen ist, über welchen der Abluftkanal (2) mit dem Frischluftkanal (1) koppelt ist.

12. Einbaumodul nach Patentanspruch 11,
bei dem das Gehäuse (8, 9, 12, 13) eine Wärmedämmschicht und/oder eine Schalldämmschicht (10, 17) aufweist.
